# EUROPEAN PATENT APPLICATION

(11) **EP 4 502 450 A1**
(43) Date of publication of application: **05.02.2025**
(21) Application number: 23275114.9
(22) Date of filing: 03.08.2023
(51) Int. Cl.: F17C 13/00

(54) **STORAGE TANK**

(71) Applicant: Crompton Technology Group Limited, Oxfordshire, OX16 4XD (GB)
(72) Inventor: LIDDEL, Paul Daniel, Banbury, Oxfordshire, OX16 4XD (GB); BERNARD, James William, Banbury, Oxfordshire, OX2 7SW (GB)
(74) Representative: Dehns

(57) **Abstract**

A safety system (26) for a storage tank (2) is provided. The storage tank includes a storage chamber (4) configured to store a working fluid, a first skin (6) forming the storage chamber, a second skin (14) positioned radially outwardly of the first skin, an insulation cavity (22) formed between the first skin and the second skin and a pressure sensor (28) configured to measure a pressure in the insulation cavity. The safety system is configured to monitor a rate of change in the measured pressure and to determine that damage to the storage tank has occurred if the rate of change in the measured pressure is above a desired value.

## Description

### FIELD

The present disclosure relates generally to a safety system for a storage tank, for example a storage tank for a cryogenic fluid, and to a method of detecting damage to the storage tank.

### BACKGROUND

It is known to store working fluids such as cryogenic liquids in double skinned storage tanks with a vacuum insulation layer provided between the two skins of the storage tank. Any damage to the storage tank may cause leakage of fluid into the insulation layer. This in turn may cause the working fluid to heat up and potentially boil, turning this into a gas with a significantly greater volume. This could potentially result in a significant loss of the stored working fluid or even an explosion.

An improved safety system for such storage tanks and improved methods of detecting damage to such storage tanks is therefore required.

### SUMMARY

In accordance with an aspect of the disclosure, there is provided a safety system for a storage tank, the storage tank comprising:
a storage chamber configured to store a working fluid;
a first skin forming the storage chamber;
a second skin positioned radially outwardly of the first skin;
an insulation cavity formed between the first skin and the second skin; and a pressure sensor configured to measure a pressure in the insulation cavity,
wherein the safety system is configured to monitor a rate of change in the measured pressure and to determine that damage to the storage tank has occurred if the rate of change in the measured pressure is above a desired value.

The above safety system for a storage tank is configured such that damage to the storage tank may be detected if a rate of change in a measured pressure in the insulation cavity is above a desired value. Thus, the storage tank according to the disclosure provides an effective means of detecting even relatively minor damage to the storage tank such that remedial or emergency action may be taken as needed. Further, the desired value may be set so as to distinguish between an expected rate of change in a measured pressure in the insulation cavity, for example due to normal deterioration of a vacuum in an insulation cavity over time and a more significant rate of change in a measured pressure in the insulation cavity indicating that damage to the storage tank has occurred.

In any example of the disclosure, the safety system may be configured to initiate an action when it is determined that damage to the storage tank has occurred. In any example of the disclosure, the action may include an automatic action, such as for example causing the storage chamber to be vented to the external atmosphere. In any example of the disclosure, the action may include alerting a user to damage to the storage tank.

In any example of the disclosure, the safety system may be configured to initiate a remedial action when the rate of change in the measured pressure exceeds a remedial threshold value. It will be understood that the remedial action may include but is not limited to actions such as maintenance or repair of the storage tank.

In any example of the disclosure, the remedial threshold value may correspond to a rate of change in the measured pressure in the cavity indicating that no damage to the storage tank has occurred. It will be understood therefore that if the rate of change in the measured pressure exceeds the remedial threshold value, at least in some examples of the disclosure, no action need be taken.

In any example of the disclosure, in addition or alternatively to being configured to initiate a remedial action when the rate of change in the measured pressure exceeds a remedial threshold value, the safety system may be configured to initiate an emergency action when the rate of change in the measured pressure exceeds an emergency threshold value.

In any example of the disclosure, the emergency threshold value may correspond to a rate of change in the measured pressure in the cavity which indicates that an emergency event may occur. In any example of the disclosure, the emergency action may include venting the storage tank to the external environment and / or carrying out urgent or immediate repairs to the storage tank.

In any example of the disclosure, the emergency threshold value may be higher than the remedial threshold value. It will therefore be understood that at least in some examples, the safety system may be configured to distinguish between a rate of change in the measured pressure which indicates that a remedial action is required, and a rate of change in the measured pressure which indicates that an emergency action is required and / or a rate of change in the measured pressure which indicates that no action is required.

In accordance with a further aspect of the disclosure, a storage tank may be provided, the storage tank comprising:
a storage chamber configured to store a working fluid;
a first skin forming the storage chamber;
a second skin positioned radially outwardly of the first skin;
an insulation cavity formed between the first skin and the second skin;
a pressure sensor configured to measure a pressure in the insulation cavity; and
a safety system according to any example of the disclosure.

In any example of the disclosure, the insulation cavity could for example be filled with insulating material. To provide optimum insulation for some working fluids however, in any example of the disclosure, the insulation cavity may be a vacuum insulation cavity.

In addition to the safety system described above, the storage tank may include other features for identifying damage and / or the type of damage to the storage tank. In any example of the disclosure therefore, the storage tank may comprise a sensor configured to detect the presence of a substance in the insulation cavity, wherein the substance is usually present in an environment external to the storage tank but not in the working fluid stored within the storage chamber. The above storage tank is configured such that a substance leaking into the insulation cavity from the external environment may be detected, such that damage to the second skin of the storage tank may be detected. Thus, the storage tank according to this example of the disclosure provides an effective means of detecting even relatively minor damage to the second, outer skin of the storage tank such that remedial or emergency action may be taken as needed.

Although the sensor could be configured to detect any suitable substance, in any example of the disclosure, the substance may be oxygen and / or nitrogen. In examples where the external environment is air and the working fluid is liquid hydrogen, the detection of either oxygen or nitrogen in the insulation cavity may indicate that air is leaking through the second, outer skin into the insulation cavity.

In addition or alternatively to the above, in any example of the disclosure, the storage tank may comprise a sensor configured to detect the presence of a component of the working fluid in the insulation cavity. It will be understood that such a sensor may be configured to aid in determining whether damage to the first skin has occurred.

It will be understood that a storage tank according to examples of the disclosure could be used to store many different working fluids. In any example of the disclosure however, the working fluid may be a cryogenic liquid, such as for example liquid nitrogen, helium, hydrogen, argon, methane, or carbon monoxide. In any example of the disclosure however, the working fluid may be liquid hydrogen.

It will be understood that a storage tank according to examples of the disclosure may be used for many different purposes. One possible use of a storage tank according to the disclosure is for storing fuel in a vehicle such as, for example, an aircraft. In accordance with a further aspect of the disclosure therefore, an aircraft may be provided, the aircraft comprising:
a storage tank according to any aspect of the disclosure; and
an engine supplied by the storage tank; and /or
a safety system according to any aspect of the disclosure.

When used in an aircraft, the storage tank according to the disclosure may provide a simple, lightweight and space saving apparatus for storing a working fluid such as a cryogenic fuel whilst monitoring the performance of the storage tank so as to provide a higher degree of safety for users of the aircraft.

In accordance with a still further aspect of the disclosure, a method of detecting damage to a storage tank is provided, the storage tank comprising:
a storage chamber configured to store a working fluid;
a first skin forming the storage chamber;
a second skin positioned radially outwardly of the first skin;
an insulation cavity formed between the first skin and the second skin; and
a sensor configured to measure a pressure in the insulation cavity,
the method comprising:
   monitoring a rate of change in the pressure measured by the sensor; and
   determining that damage to the storage tank has occurred if the rate of change in the measured pressure is above a desired value.

In any example of the disclosure, the method may comprise:
comparing the rate of change in the measured pressure to a remedial threshold value; and
initiating a remedial action when the rate of change in the measured pressure exceeds the remedial threshold value.

In any example of the disclosure, the method may comprise:
comparing the rate of change in the measured pressure to an emergency threshold value; and
initiating an emergency action when the rate of change in the measured pressure exceeds the emergency threshold value.

In accordance with a still further aspect of the disclosure, a computer program product is provided comprising instructions which, when the program is executed by a processor, cause the processor to carry out the method according to any example of the disclosure.

### BRIEF DESCRIPTION OF THE DRAWINGS

Various non-limiting examples will now be described, by way of example only, and with reference to the accompanying drawings in which:
Figure 1 shows a schematic cross section through a storage tank according to an example of the disclosure;
Figure 2 shows a safety system according to an example of the disclosure;
Figure 3 shows actions to be taken for different rates of change of pressure in an insulation cavity of a storage tank according to various examples of the disclosure; and
Figures 4A and 4B are schematic sectional views through part of a storage tank according to various examples of the disclosure.

### DETAILED DESCRIPTION

The present disclosure relates to double skinned storage tanks, for storing working fluids, for example cryogenic liquids such as liquid hydrogen, liquid nitrogen or liquid helium. Such storage tanks may for example be used to store liquid hydrogen for use as a fuel in various vehicles. In some examples, such storage tanks may be used in aerospace applications, for example to store liquid hydrogen fuel for use in an aircraft engine.

In any example of the disclosure, an insulation cavity is formed between the two skins of the double skinned storage tank. A vacuum may be formed in the insulation cavity as will be described further below. The insulation cavity may inhibit heat transfer from an outer skin of the storage tank to an inner skin thereof thus inhibiting heat transfer to the working fluid stored in the storage tank.

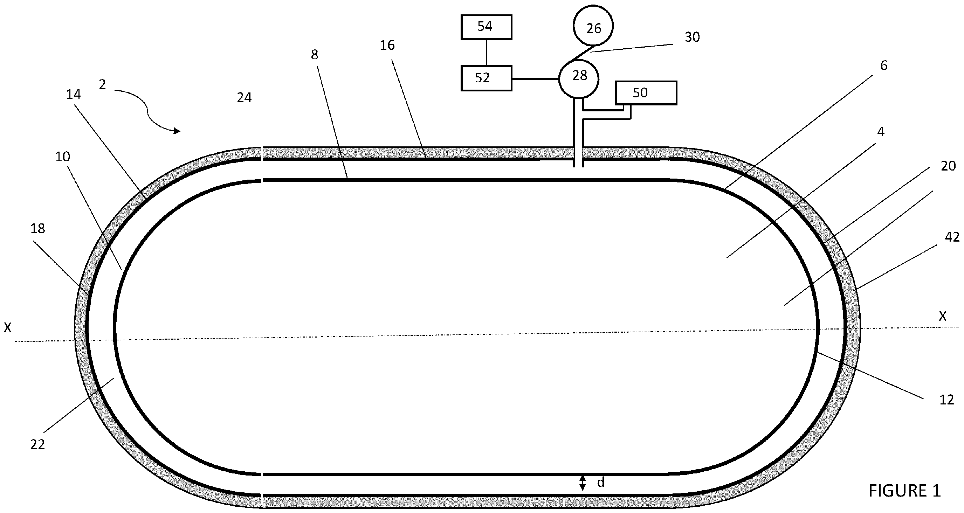

Figure 1 shows a schematic sectional view of a storage tank 2 (in one example a liquid hydrogen storage tank) according to an example of the present disclosure.

The storage tank 2 includes a storage chamber 4 which is configured to store a working fluid (liquid hydrogen in one example). In any example of the disclosure, the storage tank 2 may include one or more openings (not shown) for supplying working fluid, liquid and / or gas to the storage chamber 4 and / or for removing working fluid, liquid and / or gas from the storage chamber 4. In any example of the disclosure, the openings may be sealed, for example by valves (not shown) which can be closed to stop working fluid, liquid and / or gas escaping from the chamber 4 when it is not meant to do so. In any example, the valves can be opened to allow working fluid to be supplied to a desired location (for example an engine) from the storage chamber 4 or to be supplied to the storage chamber 4 (for example to refill the storage tank 2) when required.

The storage tank 2 includes a first skin 6 which forms the storage chamber 4. The first skin 6 may surround and /or enclose the storage chamber 2. The first skin 6 may be made of any suitable material. At least in some examples, the first skin 6 may be made of a composite material. The composite material may be made up of fibres embedded in a resin. In various non-limiting examples, the composite material may be a thermoset material (e.g. an epoxy) or a thermoplastic material (e.g. PEEK or PAEK type material) reinforced with carbon, glass or aramid fibres..

The storage chamber 4 could be any suitable shape. In examples, the chamber 4 is formed with a regular shape. In examples, the chamber 4 is formed with a rounded regular shape. In examples, the chamber 4 is formed with a spherical shape or an elipsoid shape. In examples and as shown in Figure 1, the chamber 4 is formed in the shape of a cylinder with rounded ends. In the example shown therefore, the first skin 6 forms a hollow cylinder with rounded ends. The first skin 6 may form a shape which is coaxial with the chamber 4. The first skin 6 in the example shown has a main portion 8 extending around and along a central axis X-X to form a cylindrical shape. The main portion 8 is joined at either axial end thereof to respective end portions 10 ,12. The end portions 10 ,12 are rounded and, in the example shown, are approximately hemispherical. The main portion 8 and end portions 10 ,12 together form a closed body surrounding the chamber 4.

The storage tank 2 includes a second skin 14 which is positioned radially outwardly of the first skin 6. The second skin 14 may surround the first skin 6. The second skin 14 may enclose the first skin 6. The second skin 14 may form a radially outer wall or periphery of the storage tank 2. The second skin 14 may be made of any suitable material. At least in some examples, the second skin 14 may be made of a composite material. The composite material may be made up of fibres embedded in a resin. In various non-limiting examples, the composite material may be a thermoset material (e.g. an epoxy) or a thermoplastic material (e.g. PEEK or PAEK type material) reinforced with carbon, glass or aramid fibres.

The second skin 14 may be formed into a spherical shape or an elipsoid shape. The second skin 14 may form a shape which is coaxial with the chamber 4. The second skin 14 may follow the shape of the first skin 6. However, the second skin 14 may deviate from the shape of the first skin 6 over parts thereof as required. For example, if an object one or more objects such as sensors are required to be housed in the insulation cavity 22, the second skin 14 may be formed to conform around the object or the one or more objects. In examples and as shown in Figure 1, the second skin 14 is formed in the shape of a cylinder with rounded ends. In the example shown therefore, the second skin 14 forms a hollow cylinder with rounded ends. The second skin 14 has a main portion 16 extending around and along the central axis X-X. The main portion 8 is joined at either axial end thereof to respective end portions 18 , 20. The end portions 18 , 20 are rounded and, in the example shown, are approximately hemispherical. The main portion 16 and end portions 18, 20 together form a closed body surrounding the first skin 6.

The first skin 6 and the second skin 14 are radially spaced from each other such that an insulation cavity 22 is formed between the first skin 6 and the second skin 14. The spacing between the first skin 6 and the second skin 14 may vary over the extent of the storage tank 2. In some examples however, the first skin 6 and the second skin 14 may be radially spaced from each other by a constant distance d over some or all of the surface area of the first skin 6.

In any example of the disclosure, the insulation cavity 22 may be a vacuum insulation cavity. In other words, a vacuum may be formed in the cavity between the first skin 6 and the second skin 14. The vacuum may be beneficial in stopping heat transfer from an external environment 24 (in other words, the environment external to or radially outward of the second skin 14) to the working fluid stored inside the storage chamber 4. Any suitable strength of vacuum may be used, In some examples, the vacuum may be in the range of about 10mbar to 4 mbar (about 1KPa to 0.4KPa).

Cryogenic fluids are typically stored at very cold temperatures. For example, Hydrogen only exists in liquid form over a small temperature range of about 14°K to about 20°K (about -259°C to about -252°C). This is the case even at high pressures. Thus, when stored in a storage tank 2 according to an example of the disclosure liquid hydrogen would need to be maintained at a temperature of between about 14°K to about 20°K. To insulate the liquid hydrogen or other working fluid from the external environment 24 so as to avoid heating the working fluid in the storage chamber 4, it is important to maintain the integrity of the vacuum in the insulation cavity 22.

In the example in which the working fluid is liquid hydrogen, a difference in temperature between the external environment 24 and the liquid hydrogen inside the storage chamber 4 may typically be 200°C or more. Thus, any reduction in the integrity of the vacuum in the insulation cavity 22 would lead to a loss in the insulative properties of the insulation cavity and a resulting increase in heat introduced into the liquid hydrogen from the ambient or external environment 24. This in turn may result in rapid evaporation and expansion of the liquid hydrogen to gaseous hydrogen. This may result in tank rupture or worse due to the large difference in relative volumes of liquid and gaseous hydrogen.

It will be appreciated that any damage to either the first skin 6 or the second skin 14 which allows leakage therethrough (for example due to a crack in the material of the skin) may potentially cause a reduction in the integrity of the vacuum in the insulation cavity 22. It is therefore desirable to monitor the storage tank 2 for signs of such damage such that remedial action may be taken early to avoid any potentially serious damage developing.

In any example of the disclosure, a rate of change in a pressure in the insulation cavity 22 (as measured by a sensor to be described below) may be monitored by a safety system 26 which is configured to determine that damage to the storage tank 2 has occurred if the rate of change in the measured pressure is above a desired value.

In any example of the disclosure, a pressure sensor 28 is provided for measuring a pressure in the insulation cavity 22. It will be understood that a change in pressure in the insulation cavity 22 could indicate damage to either the first skin 6 or the second skin 16. The pressure sensor 28 may be connected to the safety system 26 by a wired or wireless connection 30 such that the safety system 26 may receive pressure readings from the pressure sensor 28. In any example of the disclosure, the safety system 26 may include a processor (not shown) and may be configured to monitor the rate of change in the measured pressure in the insulation cavity 22. The safety system 26 may do this by monitoring a rate of change over time in the pressure readings received from the pressure sensor 28.

It will be understood that the rate of change over time in the pressure readings may be monitored by discreet pressure readings taken at known times being analysed to determine a rate of change over time in the pressure readings. In alternative examples, the rate of change in the pressure may be continuously monitored such that the rate of change in the pressure in the insulation cavity 22 at any given time may be analysed to determine whether or not damage has occurred to the storage tank 2.

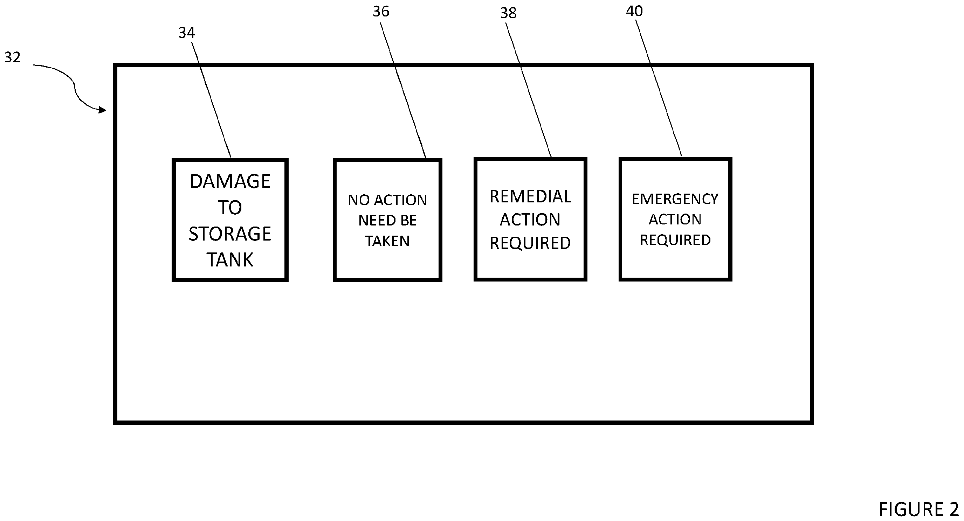

In some examples, an indicator 32 may be provided for alerting a user (for example maintenance personnel or other staff) to damage to the storage tank 2. An example indicator 32 is shown schematically in Figure 2. The indicator 3 may for example display a first message 34, emit a flashing light and /or emit an audible alarm signal to alert the user to damage to the storage tank 2.

It will be understood that the indicator 32 could be located adjacent the storage tank 2 or, in other examples, the indicator 32 could be located at a distance from the storage tank 2, for example in a control centre. In any example, a wired or wireless connection (not shown) may be provided between the indicator 32 and the safety system. Further, in any example, the indicator 32 may be contained within or form a part of the safety system 26.

In any example, the safety system 26 may be configured to compare the rate of change in the measured pressure in the insulation cavity 22 to a first predetermined value and to determine that no action need be taken (for example because the rate of change in pressure in the insulation cavity 22 is low enough to be safely ignored) when the measured pressure in the insulation cavity 22 is below the first predetermined value. In any example, the first predetermined value can be a remedial threshold value, indicating a rate of change above which some remedial action should be taken but which is well below the rate of change in pressure at which an emergency situation such as for example a fire or an explosion is likely to occur. In other examples, the remedial threshold value may correspond to a rate of change in the measured pressure in the cavity indicating that no damage to the storage tank has occurred.

In any example, the indicator 32 may be configured to provide a signal indicating that no action need be taken. The indicator 3 may for example display a message 36, emit a flashing light and /or emit an audible alarm signal to alert the user to no action needing to be taken or, in other words, to the storage tank 2 operating normally.

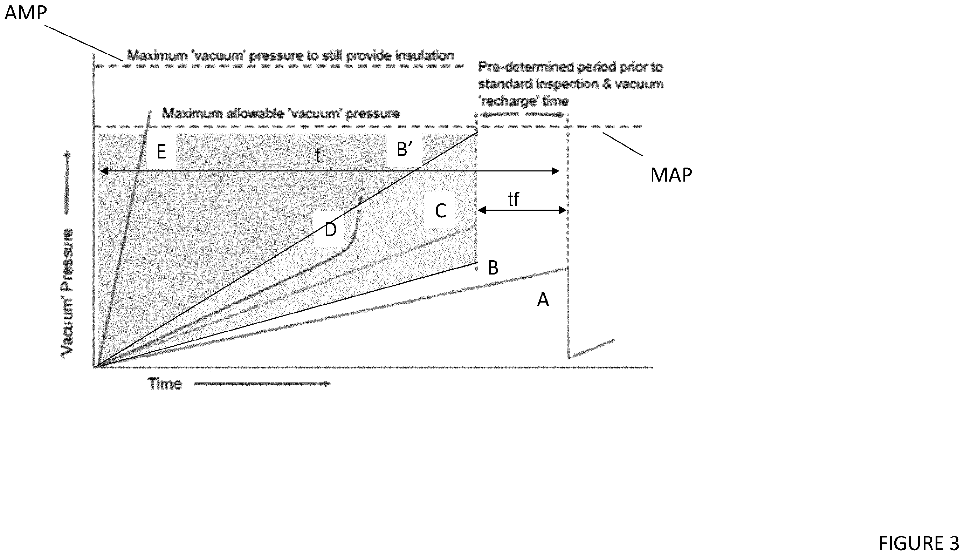

Figure 3 is a schematic graphical representation showing actions to be taken for different measured rates of change of the pressure in the insulation cavity 22. Line A represents a possible change of the pressure in the insulation cavity 22 over time, due for example to permeation of gaseous substances through the first and second skins 6, 14 when undamaged. As seen in Figure 3, when the measured rate of change of the pressure in the insulation cavity 22 is at or below the level shown by line B (for example such that it falls within the white portion of the graph as does line A), no remedial action need be taken until a standard length of time t has elapsed, after which routine maintenance checks can be carried out and / or the vacuum in the insulation cavity 22 may be recharged or topped up.

In any example, the safety system 26 may be configured to operate to a maximum allowable vacuum pressure in the insulation cavity 22. The maximum allowable vacuum pressure is shown in Figure 3 by the dotted line MAP. The maximum allowable vacuum pressure may be a value determined as a safe level at which the insulation cavity and the storage tank will operate safely. In some examples such as that shown in Figure 3, the maximum allowable vacuum pressure may be set at a lower value than the actual maximum vacuum pressure at which an acceptable level of insulation would be provided (shown by line AMP in Figure 3) so as to provide an additional safety buffer. In any example, the safety system 26 may be configured to determine whether the measured rate of change in pressure in the insulation cavity 22 will cause the pressure in the insulation cavity to reach the maximum allowable vacuum pressure within a predetermined time t. In any instance where safety system 26 determines that the measured rate of change in pressure in the insulation cavity 22 will cause the pressure in the insulation cavity to reach the maximum allowable vacuum pressure within a predetermined time t, the safety system 26 may be configured to take remedial or emergency action, for example in the manner described below.

In any example, the safety system 26 may be configured to compare the rate of change in the measured pressure in the insulation cavity 22 to the remedial threshold value and to initiate a remedial action when the rate of change in the measured pressure exceeds the remedial threshold value. In any example, the remedial action may be using the indicator 30 to alert a user to the fact that remedial action is required. This could be through the first signal 34 provided by the indicator 30 or through a further signal 38 showing that remedial action is required. In addition or alternatively, the remedial action could include rescheduling inspection and / or maintenance of the storage tank 2 so as to do this sooner than it would normally be done. The remedial action could alternatively or additionally include carrying out repairs to the storage tank and / or renewing the vacuum in the insulation cavity 22.

Line C in Figure 3 represents a slightly higher measured rate of change in the pressure in the insulation cavity 22. This rate of change is above the remedial threshold value line B but is well below the line B' of the emergency threshold value as will be described below such that it may indicate that some not very significant damage has occurred to the storage tank 2 that will not likely result in an emergency situation. In other words the measure rate of change would not result in a pressure rise above the maximum allowable vacuum pressure determined for the storage tank 2 within the standard length of time t. In such cases, the pressure rise should be assessed and inspection and maintenance should be re-scheduled (brought forward by a time tf) appropriately.

It will be understood that in any example of the disclosure, if the measured pressure in the insulation cavity 22 is found to be greater than the remedial threshold value, it may also be compared to an emergency threshold value. In such cases, the safety system may be configured to initiate the remedial action only when the measured pressure in the insulation cavity 22 is found to be greater than the remedial threshold value and lower than the emergency threshold value.

In any example of the disclosure, the safety system can be configured to compare a rate of change in the measured pressure to an emergency threshold value and to initiate an emergency action when the rate of change in the measured pressure exceeds the emergency threshold value. The emergency threshold value may correspond to a rate of change in the measured pressure in the cavity which indicates that an emergency event may occur or in other words that serious damage requiring prompt or immediate attention has been incurred by the storage tank. In any example, the emergency threshold value may be higher than the remedial threshold value.

Line D in Figure 3 again represents a slightly higher measured rate of change in the pressure in the insulation cavity 22, again indicating that less significant damage has occurred as for line C. However, if the rate of pressure rise increases over time (as seen at line D in the dotted portion thereof) so that the predicted pressure increase (shown by the dotted line) will become much greater, potentially causing an emergency event to occur, immediate action is then required. It will be appreciated that such an increase in the rate of change of pressure may only be identified where the safety system is configured to monitor the rate of change in pressure over time and to regularly or constantly compare the rate of change as determined at a given time to a required threshold value, such as the remedial threshold value, the emergency threshold value or both of these values.

In some other examples, the measured rate of change in the pressure in the insulation cavity 22 may be constant and may be high or rapid such that it is above the emergency threshold value B' as shown by line E. In such cases, this may indicate that significant damage has occurred such that immediate or emergency action is required.

In any case where it is determined that the rate of change is too high or that emergency action is required, the emergency action may include the indicator 30 providing a signal 40 showing that emergency action is required. Alternatively, an alarm or other signal may be generated. In other examples, the storage tank 2 may be caused to automatically vent to the external environment 24 when it is determined that emergency action is required or that the measured rate of change in the pressure in the insulation cavity 22 is too high.

In some examples of the disclosure, the storage tank 2 may be in a vehicle (not shown) and the safety system 26 may be configured to alert the user to damage to the storage tank 2 via a control panel (not shown) of the vehicle. In any example of the disclosure, the control panel may be visible to a user driving or flying the vehicle. In any example of the disclosure, the control panel may be located on a dashboard (not shown) of the vehicle and / or in the cockpit (not shown) thereof.

In many situations, the storage tank 2 will be located in ambient air or a similar external environment 24. In other examples however, the storage tank 2 may be surrounded by another medium such as water for example. As shown in Figure 1, the storage tank 2 may include a sensor 50 configured to detect the presence of a substance (for example a particular type of molecule or a particular type of particle) in the insulation cavity 22, wherein the substance is usually present in the external environment 24 but not in the working fluid stored within the storage chamber 4. In any example of the disclosure, and for example when the working fluid is liquid hydrogen and the external environment 24 is air or water, the substance may be oxygen and / or nitrogen. The sensor 50 may be configured to detect oxygen and / or nitrogen, for example oxygen particles and /or nitrogen particles.

When the integrity of the vacuum in the insulation cavity 22 is good (for example when the vacuum is in the range of about 1 KPa to 0.4KPa) the sensor 50 will not typically detect any of the substance in the insulation cavity 22. However, in the event of damage to the second skin 14 allowing fluid, particles or molecules from the external environment (including the substance) to pass through the second skin 16 into the insulation cavity 22, the integrity of the vacuum in the insulation cavity will be reduced. Correspondingly, the sensor 50 will detect the presence of the substance in the insulation cavity 22.

In any example of the disclosure, the sensor 50 may be configured to intermittently, regularly or continuously monitor the insulation cavity 22 to detect the presence of the substance in the insulation cavity 22. The sensor 50 may be configured only to detect the presence of the substance in the insulation cavity 22 (in other words, to detect the substance directly) or to detect the presence of the substance in the insulation cavity 22 by measuring the concentration of the substance in the insulation cavity 22.

In some examples of the disclosure, data from the sensor 50 may be stored in a data recorder 52 and subsequently reviewed by a user, for example maintenance personnel. The data recorder 52 may be provided adjacent to the storage tank 2 and external thereto. In other examples, the data recorder 52 may be located at a position which is removed from the storage tank 2, for example at a different position within an aircraft or in a control centre, for example a building which is entirely separate. In any example, a wired or wireless connection (not shown) may be provided between the sensor 50 and the data recorder 52.

The detection of the substance or an increase in the concentration of the substance in the insulation cavity 22 will alert the user to damage to the second skin 16 of the storage tank 2. The user may then determine what (if any) remedial action is required.

A processor 54 may further be provided. The processor 54 may be configured to receive data or signals from the sensor 50. The processor 54 may be configured to analyse the data or signals and to determine whether a concentration of the substance detected in the insulation cavity 22 is above a desired maximum value. The processor 54 may be configured to cause the safety system to alert a user when the concentration of the substance detected in the insulation cavity 22 is above the desired maximum value. In this example, the safety system may provide an additional signal (not shown) to alert a user when the concentration of the substance detected in the insulation cavity 22 is above the desired maximum value as shown in Figure 2. In other examples, the safety system may only be triggered when the detected concentration of the substance indicates that remedial action (for example to repair the second skin 16 or, in an emergency situation, to empty the storage chamber) should be taken.

In any example of the disclosure, a storage chamber pressure sensor (not shown) may be provided for sensing a change in the pressure in the storage chamber 4. It will be understood that a reduction in pressure in the storage chamber 4 could indicate damage to the first skin 6. An increase in pressure in the storage chamber 4 could indicate damage to either the first skin 6 or the second skin 16.

In any example of the disclosure, the storage chamber pressure sensor may be configured to measure the rate of change of the pressure in the storage chamber 4. The safety system 26 may be configured to generate an alarm indicating that immediate action is required when the measured rate of change of the pressure in the storage chamber 4 is above a predetermined threshold. The safety system 26 may also or alternatively be configured to generate a signal indicating that no immediate action is required but that minor damage to the storage tank 2 which requires attention has occurred when the measured rate of change of the pressure in the storage chamber 4 is below the predetermined threshold but above a minimum value.

It will be understood that any small increases expected from the design of the storage tank 2 as a result of expected permeation or acceptable microleaks in either the first or the second skin 6, 14 will be predetermined and considered when assessing the vacuum quality over time and whether the increase in pressure indicates damage to one of the skins.

In any example of the disclosure, the sensor 50 can be configured to also detect a component of the working fluid in the insulation cavity 22. In any example of the disclosure, the component of the working fluid may be a second substance which is not usually found in the external environment 24. It will be understood that in any example, a separate sensor (not shown) for detecting the component of the working fluid in the insulation cavity 22 could instead be provided. Detection of the component of the working fluid in the insulation cavity 22 would typically indicate damage to the first skin 6.

In any example of the disclosure, the processor 54 may be configured to determine that the first skin 6 has been damaged when the pressure sensor 28 senses a change in the pressure in the insulation cavity 22 but there is no change in the concentration of the substance in the insulation cavity 22, or none of the substance is detected by the sensor 50.

In any example of the disclosure, the processor 54 may be configured to determine that the first skin 6 has been damaged when the sensor 50 or a further sensor (not shown) detects the component of the working fluid in the insulation cavity 22.

The safety system may be configured to provide a signal (not shown) to alert a user to damage to the first skin 6 when the processor 54 determines that the first skin 6 has been damaged and / or when the sensor 50 or a further sensor detects a component of the working fluid in the insulation cavity 22 or detects an increase in concentration of the component of the working fluid in the insulation cavity 22.

It will be understood that in any example of the disclosure, the substance sensor 50 and / or the further sensor and / or the pressure sensor 28 may be located within the insulation cavity 22. Alternatively, any one or more of the substance sensor 50 and / or the further sensor and / or the pressure sensor 28 may be located externally of the second skin 14 and may be connected to the insulation cavity 22 via a sealed conduit.

In any example of the disclosure, the storage tank 2 may comprise a layer of foam 42. The layer of foam 42 may be provided radially outwardly of the second skin 14. The layer of foam 42 may be in contact with the second skin 14. The layer of foam 42 may be held against the second skin 14. For example, the layer of foam 42 may be bonded to the second skin 14, for example by an adhesive. The layer of foam 42 may extend over a part of the second skin 14. In the example shown, the layer of foam 42 covers all of the second skin 14, or in other words, it may extend over the full extent of the second skin 14 or the outer surface of the storage tank 2.

In any example of the disclosure the foam may be a spray-on type of foam or may be formed to a required shape (for example by machining) and applied to the second skin 14 either in one piece or in sections. The type of foam used for the foam layer 42 may vary. In some examples, low density polyurethane (PU) type foams may be used. These offer good thermal and cryogenic insulation. They are low density and as such low weight which may be advantageous in some examples, for example in aerospace applications. In other examples, mid-high density PU foams may be used. These still offer good insulation but have better mechanical performance and so will provide greater protection against damage to the second skin 16 due to impact.

In any example of the disclosure, it is desirable that the foam used should be compatible with any bonding systems and / or adhesives used to bond the foam layer 42 to the second skin 16. This may allow easy anchorage to the tank itself and aid repair / replacement of any section subjected to sub-critical impact.

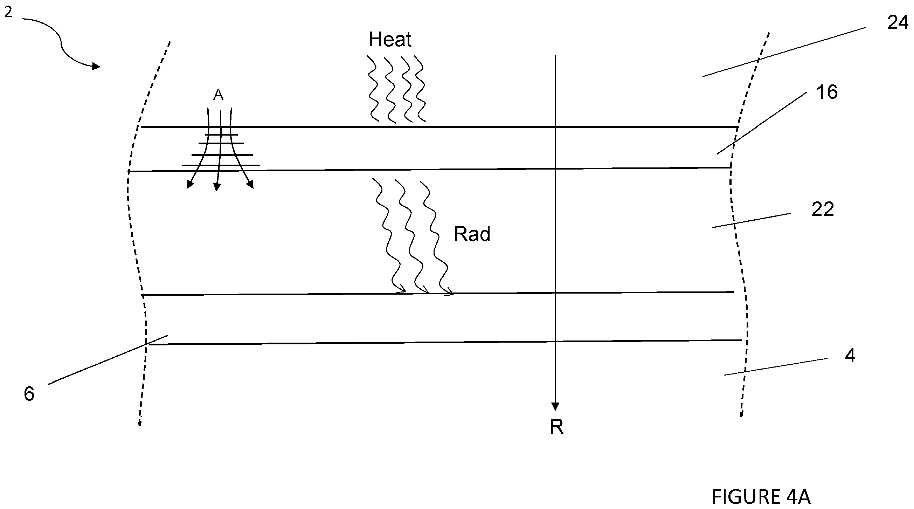

Figure 4A is a schematic sectional view through part of a storage tank 2 according to an example of the disclosure but with the foam layer removed. A storage chamber 4 is enclosed by the first skin 6 as described above. The first skin 6 is radially inward of the second skin 16 (where the radially inward direction is shown by the arrow R in Figure 4A) and a vacuum insulation cavity 22 is formed between the first skin 6 and the second skin 16 as described previously. It will be appreciated that the other features of the storage tank 2 may also include those features described above.

As seen in Figure 4A, the second skin 16 forms the outer surface of the storage tank 2 such that it is unprotected from damage, for example due to impact from an object being dropped onto the storage tank 2. Thus, a relatively low energy impact event on the outer surface of the storage tank 2 may cause significant damage to the outer skin 16, where significant damage could for example mean that the damage causes a leak from the external environment 24 into the insulation cavity 22 as shown at A.

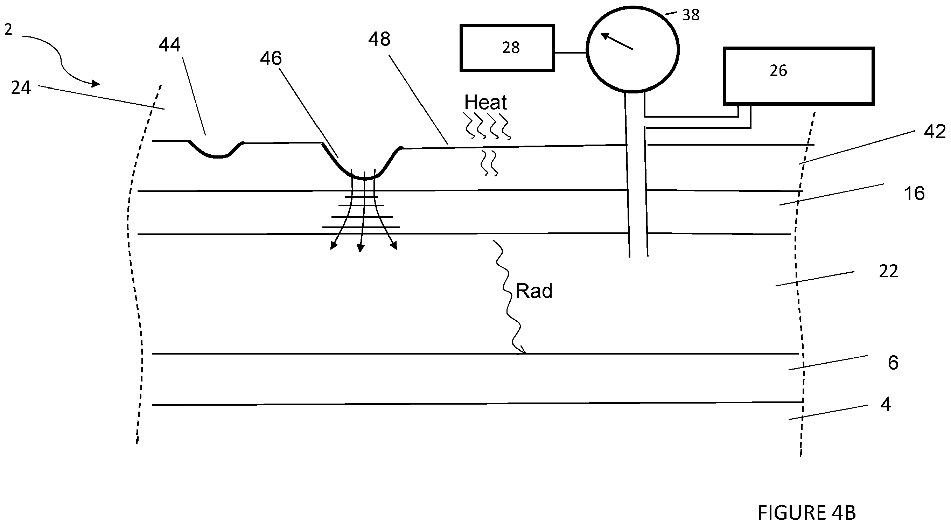

Figure 4B is a schematic sectional view through an outer wall of the storage tank 2 of Figure 4A in which a foam layer 42 is provided over and radially outwardly of the second skin 16. The foam layer 42 may provide protection against damage from impact events. A low energy or relatively low energy impact may merely cause an indent 44 to be formed in the foam layer 42. In such a case, no damage to the second skin 16 may be incurred such that no leakage into the insulation cavity 22 will occur. However, the indent 44 may be visible to the human eye. In any example, an indent in the foam could for example have a depth of between about 0.2mm and 2.5mm. In any example, the indent 44 can be identified by maintenance personnel or others inspecting the storage tank 2. The indent 44 may prompt a further inspection of the second skin 16 at or adjacent the location of the indent 44 and /or maintenance actions such as a repair to the second skin 16 if required. The indent 44 may also provide useful information in identifying locations at which impacts occur and looking for ways to mitigate against this.

In the event of a higher energy impact event on the storage tank 2, the foam layer 42 may not be sufficient to protect against damage to the second skin 16. However, in this instance, a mark or indent 46 will again be created. This mark or indent 46 may allow maintenance personnel to identify that the second skin 16 has been damaged. In alternative examples in which the damage to the outer skin 16 is identified by other means such as by the sensor and method described herein, the mark or indent 46 may enable maintenance personnel to quickly locate the site of the damage to the second skin 16 and to carry out repairs at that site. In some examples, it may be possible to merely apply a layer of resin to the second skin 16 in the region of the indent 46 and thus repair the storage tank 2.

In addition or alternatively to the impact protection provided by the foam layer 42 and described above, the foam layer 42 may also act to provide insulation to reduce the heat which may travel from the external environment 24 to the working fluid stored in the storage chamber 4 of the storage tank 2. As seen in Figure 4A, when no foam layer 42 is provided, heat is received by the second skin 16 by radiation, and / or by convection and / or (if in contact with another body) by conduction from any heat source external to the storage tank 2. Any heat received by the second skin 16 may act to increase the temperature differential between the first skin 6 and the second skin 16 such that a greater amount of heat may be transferred across the insulation cavity 22 from the first skin 6 to the second skin 16 by radiation. It will be understood that when a greater amount of heat is transferred across the insulation cavity 22 this will increase the amount of heat which will travel from the external environment 24 to the working fluid in the storage tank 4.

In contrast to this and as shown in Figure 4B, when a foam layer 42 is provided, much of the heat received at the radially outer surface 48 of the foam layer 42 is dissipated before reaching the second skin 16, thus reducing the amount of heat which reaches the inner skin 6 by radiation and so improving the insulative properties of the storage tank 2.

A method of detecting damage to a storage tank according to any of the examples described above will now be described. The method may comprise monitoring a rate of change in the pressure measured by the pressure sensor 28 and determining that damage to the storage tank has occurred if the rate of change in the measured pressure is above a desired value.

In any example, the method may comprise comparing the rate of change in the measured pressure to a remedial threshold value and initiating a remedial action when the rate of change in the measured pressure exceeds the remedial threshold value.

In any example, the method may comprise comparing the rate of change in the measured pressure to an emergency threshold value and initiating an emergency action when the rate of change in the measured pressure exceeds the emergency threshold value.

It will be understood that the method further extends to taking any of the actions described above in relation to the safety system according to the disclosure.

It will be understood that the safety system and methods described herein may be implemented using any suitable processor and / or computer program product. For example a computer program product may be provided comprising instructions which, when the program is executed by a processor, cause the processor to carry out a method according to any example of the disclosure including those methods described below.

A method of detecting damage to a storage tank, for example a storage tank according to any example of the disclosure and as described above, will now be described. The method includes operating the sensor 50 to monitor for the presence of a substance and /or to measure a concentration of the substance in the insulation cavity 22. Damage to the second skin 16 is then detected or determined to have occurred when the substance is detected and / or when the concentration of the substance has increased.

In addition to the above, the method may include monitoring the pressure in the insulation cavity 22 and / or in the storage chamber 4 and detecting damage to the first skin 6 when the pressure in the insulation cavity 22 or the storage chamber 4 has changed but there is no change in the concentration of the substance in the insulation cavity 22. The method can also or alternatively include operating the sensor 50 or the further sensor to monitor for the presence of a component of the working fluid in the insulation cavity 22. Damage to the first skin 6 is then detected or determined to have occurred when the component of the working fluid is detected in the insulation cavity 22 or when a concentration of the component of the working fluid in the insulation cavity 22 has increased.

It will be understood that the method may be used as often as required and, at least in some examples, the sensors may operate continuously or at regular intervals so as to monitor the condition of a storage tank over time and to detect any damage that occurs to the storage tank at the time that it occurs or shortly afterwards. In other examples, the sensors could be operated on demand rather than operating continuously or intermittently.

It will be understood that because even very small amounts or concentrations of the substance and / or the component of the working fluid in the insulation cavity 22 may be detected by the sensors, damage to the first and / or the second skin may potentially be identified and acted upon at a very early stage, potentially before any significant reduction in the insulating properties of the storage tank have occurred and before any significant leak of the working fluid.

In still further examples, the method of detecting damage to the storage tank 2 may include inspecting a foam layer 42 on a radially outer surface of the storage tank 2 for marks or indents 42, 46 which may indicate that the second skin 16 has been damaged, for example by an impact event.

Although the present disclosure has been described with reference to various examples, it will be understood by those skilled in the art that various changes in form and detail may be made without departing from the scope of the disclosure as set forth in the accompanying claims.

## Claims

1. A safety system for a storage tank, the storage tank comprising:
a storage chamber configured to store a working fluid;
a first skin forming the storage chamber;
a second skin positioned radially outwardly of the first skin;
an insulation cavity formed between the first skin and the second skin; and
a pressure sensor configured to measure a pressure in the insulation cavity,
wherein the safety system is configured to monitor a rate of change in the measured pressure and to determine that damage to the storage tank has occurred if the rate of change in the measured pressure is above a desired value.

2. A safety system as claimed in claim 1, wherein the safety system is configured to initiate an action when it is determined that damage to the storage tank has occurred.

3. A safety system as claimed in claim 1 or 2, wherein the safety system is configured to initiate a remedial action when the rate of change in the measured pressure exceeds a remedial threshold value.

4. A safety system as claimed in claim 3, wherein the remedial threshold value corresponds to a rate of change in the measured pressure in the cavity indicating that no damage to the storage tank has occurred.

5. A safety system as claimed in any preceding claim, wherein the safety system is configured to initiate an emergency action when the rate of change in the measured pressure exceeds an emergency threshold value.

6. A safety system as claimed in claim 5, wherein the emergency threshold value corresponds to a rate of change in the measured pressure in the cavity which indicates that an emergency event may occur.

7. A safety system as claimed in claim 5 or 6 when dependent on claim 3,
wherein the emergency threshold value is higher than the remedial threshold value.

8. A storage tank comprising:
a storage chamber configured to store a working fluid;
a first skin forming the storage chamber;
a second skin positioned radially outwardly of the first skin;
an insulation cavity formed between the first skin and the second skin;
a pressure sensor configured to measure a pressure in the insulation cavity; and
a safety system as claimed in any preceding claim.

9. A safety system as claimed in any of claims 1 to 7 or a storage tank as claimed in claim 8, the storage tank comprising:
a sensor configured to detect the presence of a substance in the insulation cavity, wherein the substance is usually present in an environment external to the storage tank but not in the working fluid stored within the storage chamber; and /or
a sensor configured to detect the presence of a component of the working fluid in the insulation cavity.

10. A safety system as claimed in any of claims 1 to 7 or 9 or a storage tank as claimed in claim 8 or 9, wherein the working fluid is a cryogenic liquid, optionally wherein the cryogenic liquid is liquid hydrogen; and / or wherein the insulation cavity is a vacuum insulation cavity.

11. An aircraft comprising:
a storage tank as claimed in any of claims 8 to 10; and / or
an engine supplied by the storage tank; and /or
a safety system as claimed in any of claims 1 to 7.

12. A method of detecting damage to a storage tank, the storage tank comprising:
a storage chamber configured to store a working fluid;
a first skin forming the storage chamber;
a second skin positioned radially outwardly of the first skin;
an insulation cavity formed between the first skin and the second skin; and
a sensor configured to measure a pressure in the insulation cavity,
the method comprising:
monitoring a rate of change in the pressure measured by the sensor; and
determining that damage to the storage tank has occurred if the rate of change in the measured pressure is above a desired value.

13. A method as claimed in claim 12, comprising:
comparing the rate of change in the measured pressure to a remedial threshold value; and
initiating a remedial action when the rate of change in the measured pressure exceeds the remedial threshold value.

14. A method as claimed in claim 12 or 13, comprising:
comparing the rate of change in the measured pressure to an emergency threshold value; and
initiating an emergency action when the rate of change in the measured pressure exceeds the emergency threshold value.

15. A computer program product comprising instructions which, when the program is executed by a processor, cause the processor to carry out the method as claimed in any of claims 12 to 14.
